# EUROPEAN PATENT SPECIFICATION

(11) **EP 0 309 794 B1**
(45) Date of publication and mention of the grant of the patent: **28.01.1998**
(21) Application number: 88114787.0
(22) Date of filing: 09.09.1988
(51) Int. Cl.: C08J 3/24, C08L 33/08, C08K 5/19, C08K 5/50, C08K 5/00

(54) **No-post-cure method of curing polyacrylate polymers**
Härtungsverfahren für Acrylatpolymere ohne Nachhärtung
Procédé de durcissement sans postcuisson pour des polymères acryliques

(30) Priority: 28.09.1987 US 101883; 04.08.1988 US 227396
(43) Date of publication of application: 05.04.1989
(73) Proprietor: Zeon Chemicals Incorporated, Rolling Meadows, Ill. 60008 (US)
(72) Inventor: Wolf, Fred Richard, Avon Lake Ohio 44012 (US)
(74) Representative: von Kreisler, Alek, Dipl.-Chem.

(56) References cited:
- US-A- 3 875 092
- US-A- 3 912 672
- US-A- 3 925 281

## Description

### FIELD OF THE INVENTION

The present invention pertains to a no-post-cure method for curing polyacrylates having dual cure sites. The cure system consists of a substituted phosphonium quaternary salt and sometimes an acid acceptor such as an alkali metal salt. The no-post-cure method of the present invention is unique because the polyacrylate rubber, when admixed with the proper amount of the curative, has an extremely long shelf stability so long as it is maintained below the threshold temperature range. When it is desired to cure the polyacrylate polymers having the curative admixed therein, one merely has to raise the temperature to within the threshold temperature range.

### BACKGROUND ART

Processes are known for curing polyacrylate polymers having dual cure sites by employing quaternary ammonium salts, for example, as a curative. Exemplary of methods for curing polyacrylate polymers are the following three U.S. patents.

U.S. -A- 3,875,092 to Morris discloses acrylate rubbers having both halogen and carboxyl cure sites which are vulcanized using as the only curing agent a quaternary ammonium salt. The vulcanized compositions exhibit good physical properties and low press-cured and post-cured compression sets.

U.S. -A- 3,912,672 to Morris et al discloses a cure system for dual cure site acrylate rubbers. The acrylate rubbers have both halogen and carboxyl cure sites and are vulcanized using an alkali metal salt of a carboxylic acid or an organo-phosphoric acid. The alkali metal salt may be sodium or potassium stearate. The vulcanization can also occur with the addition of a quaternary ammonium salt or an amine to catalyze the vulcanization.

U.S. -A- 3,976,610 to Morris, et al, discloses acrylate rubbers having both halogen and carboxyl cure sites which are vulcanized using an alkali metal salt of a carboxylic or organo-phosphoric acid and an amine-blocked isocyanate. The alkali metal salt may be sodium or potassium stearate. Like the other polyacrylate vulcanizable compositions, these compositions exhibit low press-cured and post-cured compression sets.

None of the above mentioned patents describe a no-post-cure process and do not recognize a temperature threshold effect for polyacrylate rubbers. The following patent does briefly mention the possibility of a no-post-cure process.

U.S. -A- 4,650,834 to Yagishita, et al, describes a vulcanizable elastomer containing an epoxy group as the cure site. The vulcanizable epoxy elastomer also includes a carboxylic acid having at least two carboxyl groups in the molecule. The curative for vulcanizing the elastomer may be either a quaternary ammonium or phosphonium salt. While this patent does mention the possibility of omitting a post-curing stage, none of the examples omit the post-cured stage. Moreover, this reference is completely silent with respect to a good shelf stability and a temperature threshold.

These above references are exemplary of curing processes which require about a 15 to 20 hour post-cure time (even Yagishita, et al, employed a 16 hour post-cure). Acrylate rubbers exhibit favorable qualities of weatherability, high temperature serviceability, and good oil resistance. These qualities make the rubbers useful for automotive and non-automotive applications such as industrial and out-of-door applications. Their use is limited by the tendency of the vulcanizates to post-cure during use. This results in property change and in some cases in failure of the article. To overcome these problems, the acrylate rubber vulcanizates are purposely postcured, often as long as 24 hours or more, to obtain a more complete cure. This is shown by a reduced compression set. It would be of great advantage to the industry to reduce or eliminate the time required for post-cure. It is of further advantage that the acrylate compounds have long shelf stability. In the past, processing such as compression, injection, or transfer molding; steam autoclave; continuous vulcanization (CV) cure techniques, and the like, have been limited by slow cure and poor shelf stability. These problems are solved by the present invention.

### SUMMARY OF THE INVENTION

The present invention relates to a no-post-cure method of curing polyacrylate rubber having halogen and carboxyl cure sites, comprising:
mixing 0.1 to 25 parts by weight, per 100 parts by weight of rubber, of a curative with said polyacrylate rubber until a uniform vulcanizable composition results, said acrylate rubber comprising (a) from 40 percent to 99.8 percent by weight of an acrylate of the formula: 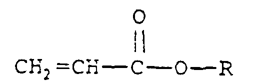 wherein R is selected from the group consisting of an alkyl radical containing 1 to 18 carbon atoms, an alkoxyalkyl, an alkylthioalkyl, and a cyanoalkyl radical containing 2 to 12 carbon atoms; (b) from 0.1 percent to 30 percent by weight of a halogen-containing monomer selected from the group consisting of halogen-containing vinylene hydrocarbons and halogen-containing vinyl monomers having the halogen group at least two carbon atoms removed from an oxygen group; (c) from 0.1 percent to 20 percent by weight of a carboxyl-containing monomer; and (d) up to 35 percent by weight of a copolymerizable monomer containing a terminal vinylidene group, said curative being a phosphonium quaternary salt of an acid selected from the group consisting of carboxylic acids containing from 2 to 24 carbon atoms and organophosphoric acids of the formula

   (R-O)_{z}PO_{y}M

   where M is the phosphonium quaternary salt, y equals 1 or 2, z equals 1 or 2, and y plus Z equals 3, and R is selected from the group consisting of alkyl radicals containing from 1 to 24 carbon atoms, and aryl radicals containing from 6 to 24 carbon atoms;
blending these components into a uniform composition below an activation temperature range prior to a curing step, and
heating during said curing step said composition above an activation temperature range which causes said composition to substantially cure whereby no-post-cure is necessary.

The present invention further relates to a no-post-cure method for curing the polyacrylate rubber as defined above wherein the curative is used in an amount of 0.5 to 25 parts by weight, based on 100 parts by weight of rubber, and comprises a metallic acid salt and a quaternary salt, said metallic acid salt being selected from the group consisting of carboxylic acids containing from 2 to 24 carbon atoms and organophosphoric acids of the formula

(R-O)_{z}PO_{y}M

where M is an alkali metal, y equals 1 or 2, z equals 1 or 2, and y plus z equals 3, and R is selected from the group consisting of alkyl radical containing from 1 to 24 carbon atoms, and aryl radical containing from 6 to 24 carbon atoms and said quaternary salt being phosphonium quaternary salt of an anion X where X is an anion of an organic or inorganic acid wherein the acidic hydrogen is associated with a halogen or an oxygen atom;
blending these components into a uniform composition below an activation temperature range prior to a curing step and
heating during said curing step said composition above an activation temperature range which causes said compositicn to substantially cure whereby no post-cure is necessary.

The no-post-cure method of curing polyacrylates having dual cure site is accomplished using a specific two-part curing system or a combined one-part curing system. The two-part curing system consists of metallic acid salt, and particularly sodium and potassium stearate, along with an alkyl substituted phosphonium quaternary salt. The polyacrylate rubber must have both a halogen and a carboxyl cure site. The phosphonium salt has the following formula: 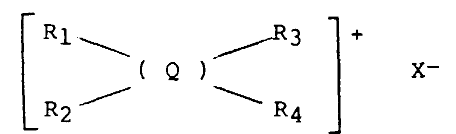 wherein Q is phosphorous, wherein R₁, R₂, R₃ and R₄ are hydrocarbon radicals, and wherein X is an anion of an organic or inorganic acid wherein the acidic hydrogen is attached to a halogen or an oxygen atom, and in particular wherein X is a halogen or alkyl, alkaryl or alkoxy acid of the group carboxylic, phosphoric and sulfuric acid.

The two-part curing system consists of a metallic acid salt and a quaternary salt, as described previously. It is believed that when the two-part curing system is uniformly blended and "reacted", the anion from the quaternary salt reacts with the metallic acid salt to form a quaternary acid salt.

Therefore, a one-part curing system may also be employed in the present invention if the quaternary salt is an acid salt as defined above. As an example, X⁻ can be a stearate RCOO⁻ and preferably C₁₇H₃₅COO⁻.

In the broadest sense, the present invention consists of a no-post-cure method of curing a dual site (halogen/carboxyl) polyacrylate elastomer by employing a cure system having an acid such as a metallic acid salt or an organo phosphoric acid and a phosphonium quaternary salt by blending these components into a uniform composition at a temperature below the threshold or activation temperature range, and heating the composition to within or above the activation or threshold temperature range to cure the polyacrylate elastomer. The quaternary salt could be an acid salt such as a stearate salt.

The method may further include the step of storing said composition below said activation temperature range after said mixing step and before said heating step, said storing step does not destroy the shelf stability of said composition.

### DETAILED DESCRIPTION

Acrylate rubbers of the present invention which can be cured without a post-cure system are interpolymers comprising acrylate monomer(s), a reactive halogen-containing monomer, and a carboxyl-containing monomer.

The acrylate rubber contains from 40% to 99.8% by weight, based upon the weight of the polymer, of an acrylate of the formula: 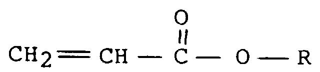 wherein R is an alkyl radical containing 1 to 18 carbon atoms, an alkoxyalkyl or alkylthioalkyl and a cyano alkyl radical containing 2 to 12 carbon atoms. The alkyl structure can contain primary, secondary, or tertiary carbon configurations. Examples of such acrylates are methyl acrylate, ethyl acrylate, propyl acrylate, n-butyl acrylate, isobutyl acrylate, n-pentyl acrylate, isoamyl acrylate, n-hexyl acrylate, 2-methyl-pentyl acrylate, n-octyl acrylate, 2-ethylhexyl acrylate, n-decyl acrylate, n-dodecyl acrylate, n-octadecyl acrylate; methoxymethyl acrylate, methoxyethyl acrylate, ethoxyethyl acrylate, butoxyethyl acrylate, ethoxypropyl acrylate, methylthioethyl acrylate, hexylthioethyl acrylate; and α,β-cyanoethyl acrylate, α,β-and δ-cyanopropyl acrylate, cyanobutyl acrylate, cyanohexyl acrylate, cyanooctyl acrylate. Often mixtures of two or more monomers and/or types of acrylate monomers can be employed.

Preferably, the rubber contains from 65% to 99.6% by weight of acrylates of the formula set forth previously, wherein R is an alkyl radical containing 1 to 10 carbon atoms or an alkoxyalkyl radical containing 2 to about 8 carbon atoms. Examples of the more preferred acrylates are ethyl acrylate, propyl acrylate, n-butyl acrylate, hexyl acrylate, 2-ethylhexyl acrylate, octyl acrylate, and methoxyethyl acrylate, ethoxyethyl acrylate. Both an alkyl acrylate and an alkoxyalkyl acrylate can be used.

The rubber contains from 0.1% to 30% by weight of an active halogen-containing monomer. The halogen groups can be chlorine, bromine, or iodine. Examples of such monomers are vinyl chloroacetate, vinyl bromoacetate, allyl chloroacetate, vinyl chloropropionate, vinyl chlorobutyrate, vinyl bromobutyrate, 2-chloroethyl acrylate, 3-chloropropyl acrylate, 4-chlorobutyl acrylate, 2-chloroethyl methacrylate, 2-bromoethyl acrylate, 2-iodoethyl acrylate, 2-chloroethyl vinyl ether, chloromethyl vinyl ketone, 4-chloro-2-butenyl acrylate, vinyl benzyl chloride, 5-chloromethyl-2-norbornene, 5-(α-chloroacetoxymethyl)-2-norbornene, 5-(α,β-dichloropropionylmethyl)-2-norbornene. The preferred monomers are vinyl chloroacetate, allyl chloroacetate, 2-chloroethyl acrylate, 2-chloroethyl vinyl ether, vinyl benzyl chloride, 5-chloromethyl-2-norbornene, and 5-chloroacetoxymethyl-2-norbornene.

More preferably, the rubber contains from 0.2% to 15% by weight of the active halogen-containing monomer. At this level, the halogen content is from 0.1% to 5% by weight of the rubber. Due to the availability and cost, the chlorine-containing monomers are preferred.

The rubbers also contain from 0.1% to 20% by weight of a carboxyl-containing monomer. The monomer can be monocarboxylic or polycarboxylic, containing from 3 to 8 carbon atoms. Examples of such monomers are acrylic acid, methacrylic acid, ethacrylic acid, β,β-dimethylacrylic acid, crotonic acid, 2-pentenoic acid, 2-hexenoic acid, maleic acid, furmaric acid, citraconic acid, mesaconic acid, itaconic acid, 3-butene-1,2,3-tricarboxylic acid.

More preferably the rubber contains from 0.2% to 10% by weight of the carboxyl-containing monomer. At this level, the carboxyl content is from 0.1% to 7% by weight of the rubber. The more preferred monomers are the monocarboxylic acid monomers such as acrylic acid, methacrylic acid, itaconic acid.

The rubber can contain up to 35% and preferably up to 10% by weight of other copolymerizable vinylidene monomers having a terminal vinylidene (CH₂ = C 〈 ) group. Examples of such are phenyl acrylate, cyclohexyl acrylate, methacrylates such as methyl methacrylate, ethyl methacrylate; vinyl and allyl esters such as vinyl acetate, vinyl propionate, allyl acetate; vinyl ketones such as methyl vinyl ketone; vinyl and allyl ethers such as vinyl methyl ether, vinyl ethyl ether, allyl methyl ether; vinyl aromatics such as styrene, α-methyl styrene, vinyl toluene; vinyl nitriles such as acrylonitrile and methacrylonitrile; vinylamides such as acrylamide, methacrylamide, N-methyl methacrylamide; and dienes and divinyls such as butadiene, isoprene, divinyl benzene, divinyl ether, diethylene glycol diacrylate. The more preferred copolymerizable monomers are vinyl acetate, methyl methacrylate, ethyl methacrylate, styrene, acrylonitrile, acrylamide, divinyl benzene, and diethylene glycol diacrylate.

The acrylate rubbers can be prepared using emulsion (latex), suspension, solution and bulk techniques known to those skilled in the art. Because it is desirable to polymerize the monomers to 90% conversion or over, emulsion and suspension techniques are usually employed. The polymerization can be performed as a batch reaction or one or more ingredients can be proportioned during the manufacturing process. Temperature of polymerization ranges from -10°C to 100°C, whereas a more preferred range is from 5°C to 80°C.

The polymerization can be initiated by free-radical generating agents. Examples of such agents are organic peroxides and hydroperoxides such as benzoyl peroxide, dicumyl peroxide, cumene hydroperoxide, paramethane hydroperoxide, used alone or with redox systems; diazo compounds such as azobisisobutyronitrile; persulfate salts such as sodium, potassium, and ammonium persulfate, used alone or with redox systems; and the use of utraviolet light with photo-sensitive agents such as benzophenone, triphenylphosphine, organic diazos.

Typical emulsion polymerization ingredients would include a persulfate salt or organic peroxide and usually a redox system, water adjusted to the desired pH with acids or basis and usually buffered with inorganic salts, and either anionic, cationic, or nonionic surface active agents well known in the art.

The polymerization normally is continued until about 90% conversion of the monomers is obtained. The resulting latex (if the emulsion process is employed) can be coagulated to isolate the polymer. Typical coagulation procedures are salt-acid coagulations, use of polyvalent metal salts such as magnesium sulfate (MgSO₄) or calcium chloride, use of alcohols such as methanol, isopropyl alcohol, and freeze agglomeration techniques. The rubber is then usually washed with water and dried.

The acrylate rubbers have raw polymer Mooney values [ML-4 at 100°C (212°F)] from 20 to 100.

The rubbers are admixed with cure ingredients and compounding ingredients using conventional equipment such as a Banbury® mixer, extruders, and the like.

When preparing a vulcanizable composition, the polymer is mixed with the curing agents in the Banbury® mixer, or other conventional equipment. The vulcanizable composition, in addition to the curing system and the polymers, may also include conventional carbon blacks, other fillers, antioxidants, emulsifiers, plasticizers, retarders, accelerators, and the like conventionally known in the art.

The two-part cure system of the present invention consists of a metallic acid salt and an alkyl substituted phosphonium quaternary salt. The metallic acid salt can be a carboxylic acid containing from 2 to 24 carbon atoms and organophosphorus acids of the formula

(R―O)_{z} PO_{y}M

where M is an alkali metal, y equals 1 or 2, z equals 1 or 2, and y plus z equals 3, and R is selected from the group consisting of alkyl radicals containing from 1 to 24 carbon atoms, and an aryl radical containing from 6 to 24 carbon atoms. Specific examples of suitable metallic acid salts include carboxylic acid salts such as stearic, acetic, butyric, lauric, palmetic, oleic, benzoic acids; and organophosphoric acid salts such as alkylphenoxy poly(ethyleneoxy) ethyl phosphate. More specific acid salts include sodium stearate, potassium stearate, copper stearate.

The substituted phosphonium quaternary salts are salts in which all four hydrogen atoms of phosphonium have been replaced with organic radicals. The quaternary phosphonium salts have the structure 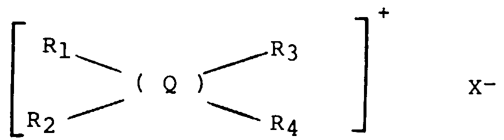 wherein Q is phosphorous, wherein R₁, R₂, R₃ and R₄ are hydrocarbon radicals containing 1 to 18 carbon atoms such as alkyl, aryl, alkaryl, aralkyl radicals, or wherein two or three of the R₁, R₂, R₃ and R₄ form with the phosphorous atom a heterocyclic structure containing 3 to 8 atoms selected from the group consisting of carbon, nitrogen, oxygen and sulfur wherein at least two atoms are carbon; and X is an anion of an organic or inorganic acid wherein the acidic hydrogen is attached to a halogen or an oxygen atom, and in particular wherein X is a halogen or alkyl, alkaryl or alkoxy acid of the group carboxylic, phosphoric and sulfuric acid. More specific examples of such anions include chlorine (Cl⁻), bromine (Br⁻), iodine (I⁻), or hydroxide (OH⁻), sulfuric acid (HSO₄), phosphoric acid (H₂PO₄), carboxylic acid (RCOO⁻), organo-sulfuric acid (ROSO₃ or RSO₃), and organo-phosphoric acid (ROPO₃H) where in the last examples R is an alkyl or alkaryl radical containing from 1 to 18 carbon atoms.

In the one-part cure system of the present invention, the metallic acid salt is not employed and the phosphonium quaternary salt must be a carboxylic or organophosphoric acid salt. Specifically the curative is a phosponium quaternary acid salt wherein the acid is either a carboxylic acid containing from 2 to 24 carbon atoms or an organophosphorus acid of the formula

(R―O)_{z} PO_{y}M

where M is the phosphorium quaternary salt, y equals 1 or 2, z equals 1 or 2, and y plus 2 equals 3, and R is selected from the group consisting of alkyl radicals containing from 1 to 24 carbon atoms, and an aryl radical containing from 6 to 24 carbon atoms. Preferably, in the one-part cure system, X is a stearate ion of the formula RCOO⁻, and more preferably C₁₇H₃₅COO⁻. The preferred quaternary phosphonium stearate salt has the following formula: 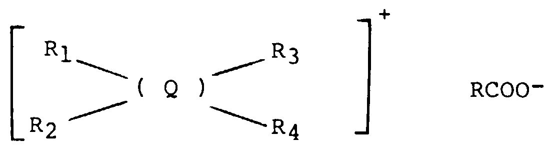 wherein Q is phosphorous, and wherein R₁, R₂, R₃, and R₄ are the same as previously stated.

Examples of quaternary phosphonium salts for the two-part cure system are tetraphenyl phosphonium bromide, hexadecyltributyl phosphonium bromide, tetraphenyl phosphonium chloride, tetraphenyl phosphonium iodide, tetrabutyl phosphonium chloride, tetrabutyl phosphonium bromide, triphenylbenzyl phosphonium chloride, triphenylbenzyl phosphonium bromide, triphenylbenzyl phosphonium iodide, triphenylmethoxymethyl phosphonium chloride, triethylbenzyl phosphonium chloride, tricyclohexylbenzyl phosphonium chloride.

Examples of quaternary phosphonium acid salts employed as the one-part curative are trimethylbenzyl phosphonium stearate, trimethylsoya phosphonium stearate, tetramethyl phosphonium stearate, cetyltrimethyl phosphonium stearate, dimethylphenylbenzyl phosphonium stearate, alkylphenoxypoly(ethyleneoxy)ethyl phosphate.

These quaternary phosphonium salts may be used singlely or as a mixture of two or more. The amount of the quaternary phosphonium salt is usually 0.1 to 25 parts by weight per 100 parts by weight of the polymer, and preferably 1 to 4 parts. The metallic acid salt employed in the two-part cure system is in the range of 0.1 to 10 parts by weight per 100 parts by weight of the polymer, and preferably 2-6 parts. These ranges have been selected for high vulcanization or curing speeds and excellent processing stability and long term storage stability of the vulcanizable composition with excellent mechanical properties and compression sets when the vulcanizable composition is cured. If the amount of metallic acid salt and quaternary salt is below the specified ranges, vulcanization or curing proceeds very slowly such that it is almost nonexistent. On the other hand, if the amount of metallic acid salt and quaternary salt is above these ranges, the curing or vulcanization speed is extremely fast, allows no processing time and is very scorchy. Additionally, the mechanical properties and the compression sets are greatly reduced.

As previously mentioned, these ingredients may be mixed with conventional equipment such as a Banbury mixer.

As an aspect of the present invention the composition utilized in the present process has "threshold temperature characteristics." By this term it is meant that once a uniform composition has been obtained, the vulcanizable composition will remain shelf-stable over long periods of time so long as it is maintained below the threshold temperature. However, once the composition is subjected to this temperature, it will cure relatively rapidly and completely so that a post cure step is not necessary. More specifically, the composition will have a relatively low rate of cure as shown by a low minimum viscosity change over time as long as the composition is maintained below the threshold temperature. In particular, the method of the invention results in a vulcanizable composition having a minimum viscosity change of less than 150 Mooney units over a two-week period as measured by the Mooney Viscometer Large Rotor Test ASTM D1646 at 100°C, and preferably of less than 5 Mooney Units over an eight-week period. However, once the composition is subjected to the threshold temperature, the composition will cure relatively rapidly. The "threshold temperature" criteria means a temperature at which the t₅ value measured by the Mooney Viscometer Large Rotor Test (ASTM D1646) increases by 5 points or more in 31 minutes. Moreover, in accordance with the present invention at temperatures above the threshold temperature, the cure will be relatively complete as to eliminate the need for a post-cure step. The completeness of the curing step without the prior art post-cure step is shown by a compression set after 70 hours at 150°C, plied, percent (ASTM Test D395), by equal or less than 80 and preferably equal or less than 40.

The threshold temperature varies for each combination of metallic acid salt and quaternary salt employed. However, the preferred two-part curative is shelf stable if maintained below about 50°C. Generally, for the preferred curatives the threshold temperature ranges from 90°C to 150°C. Above 150°C, most of the vulcanizable compositions cured extremely fast and would be too scorchy to process.

Although it was mentioned previously that the vulcanization rate may be extremely fast if the amount of curative employed is above a certain preferred range, the upper limit of this range may be extended if conventional acrylate polymer retarders are employed. If retarders are employed, the vulcanization rate can be reduced. However, if employing greatly excessive amounts of curative with copious amounts of retarder, the vulcanization rate may be reduced but the physical properties of the resultant polymer are very poor. The best physical properties are obtained when very little retarder is employed. Conventional retarders for polyacrylate polymers are acids, such as citric acid, acetic acid, stearic acid, and the like.

### EXAMPLE 1

This example demonstrates a large number of phosphonium quaternary salts having halogen or hydroxide reactive groups are temperature sensitive, i.e., are shelf stable below a temperature range, but can cure with good mechanical and compression set properties without post curing being necessary so long as curing occurs within the threshold temperature range.

| A Master Batch | Level |
|---|---|
| Polyacrylate rubber having halogen and carboxyl dual cure sites | 100 parts by wt. |
| Stearic Acid (lubricant and retarder) | 1 |
| Struktol® WB-222 (fatty soap, processing aid) | 2 |
| Philblack® N 550 (carbon black, filler) | 65 |
| Stalite® S (octylated diphenyl amine, antioxidant) | 2 |

The master batch was uniformly mixed in a Banbury mixer. 400 grams of the master batch was then blended with sodium stearate, 9.4 grams (4 parts), and a curative set forth below (the equivalent of 1 part per 100 parts of polymer). All curatives were used at the same molar level. Accordingly, depending upon the molecular weight of the curative, the curative would not necessarily be employed at 1 part per 100 parts of rubber.

The curatives employed were:
1. Tetraphenyl phosphonium bromide,
2. Hexadecyltributyl phosphonium bromide,
3. Tetraphenyl phosphonium chloride,
4. Tetraphenyl phosphonium iodide,
5. Tetrabutyl phosphonium chloride,
6. Tetrabutyl phosphonium bromide,

As soon as the curatives were uniformly blended with the master batch, a Rheometer microdie oscillating disc test was run at 100 cpm, 190°C with 3° arc. The minimum (M_{L}) point, maximum (M_{HF}) point, and cure point (t₉₀), the time when 90% of the torque change was achieved, were recorded for the curative systems. Additionally, a Mooney viscosity and a t₅ and t₃₅, in minutes, were conducted at 100°C and 125°C. The results of those tests are as set forth below.

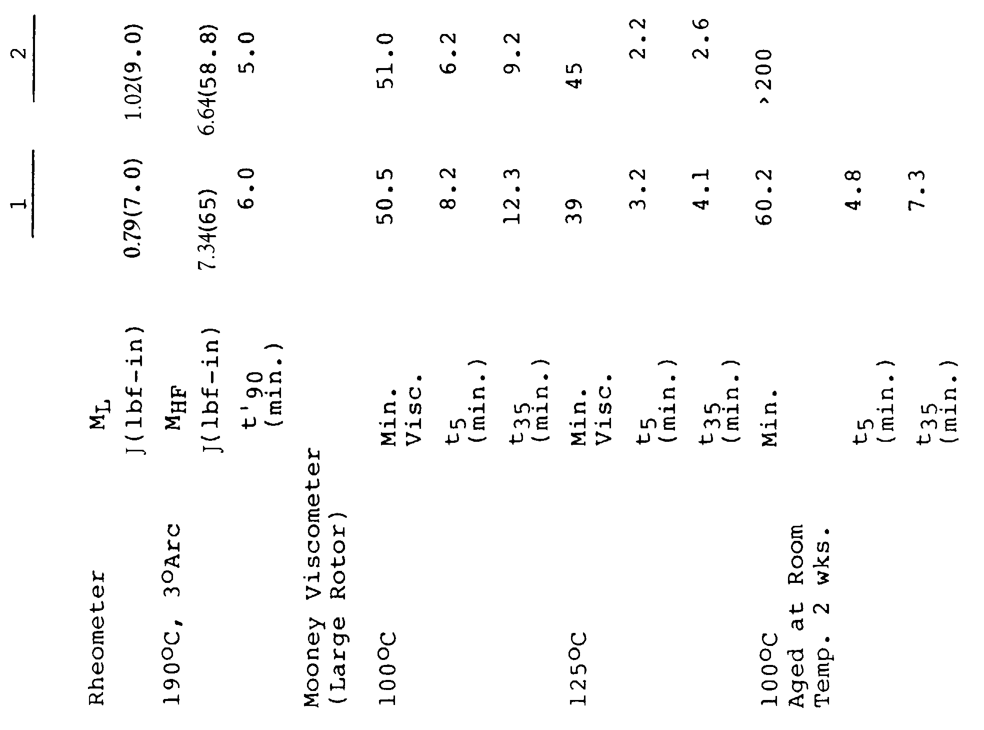

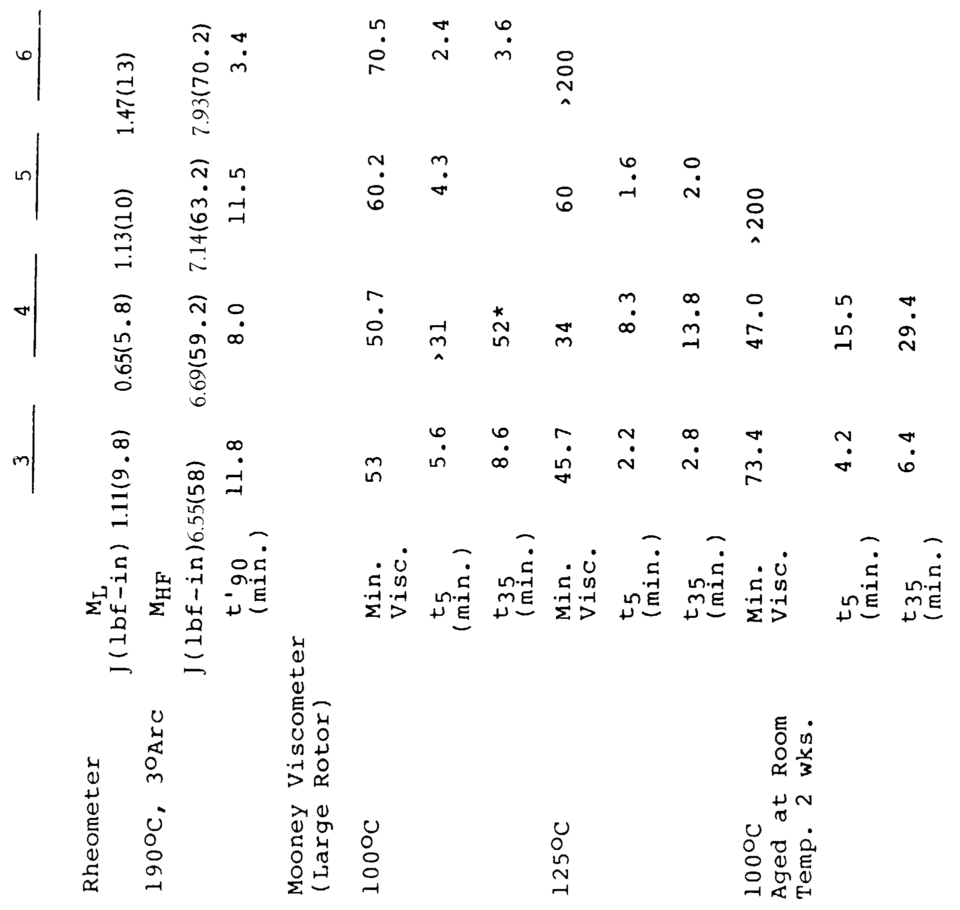

As is evident from the above Examples, some of the curatives were quicker than others. The curatives which vulcanize quickly could be employed along with a retarder to slow down the curing time such that there is a longer processing time. The curatives which have a slow processing time could be employed in amounts greater than employed in this example so that the processing time could be greatly reduced. Based upon the above data, it is clear that many different curatives can be employed and the processing time can be controlled by the use of retarders or greater or lesser amounts of the curative itself.

### EXAMPLE 2

The original physical properties of the various compounds set forth in Example 1 are set forth in the table below. The physical properties were determined by curing the samples for four minutes at 190°C and the compression set data was determined after 70 hours at 150°C. The first physical property, stress at 100 percent elongation, set forth is the amount of force per unit area (stress) necessary to stretch the vulcanized polymer to 100% of its original elongation according to ASTM D 412. The second physical property tested was its maximum tensile at break and the third physical property is the percent elongation at break, according to ASTM D 412. The next physical property tested is the hardness according to ASTM D 2240. The last physical property is the plied compression set according to ASTM D 395, method B.

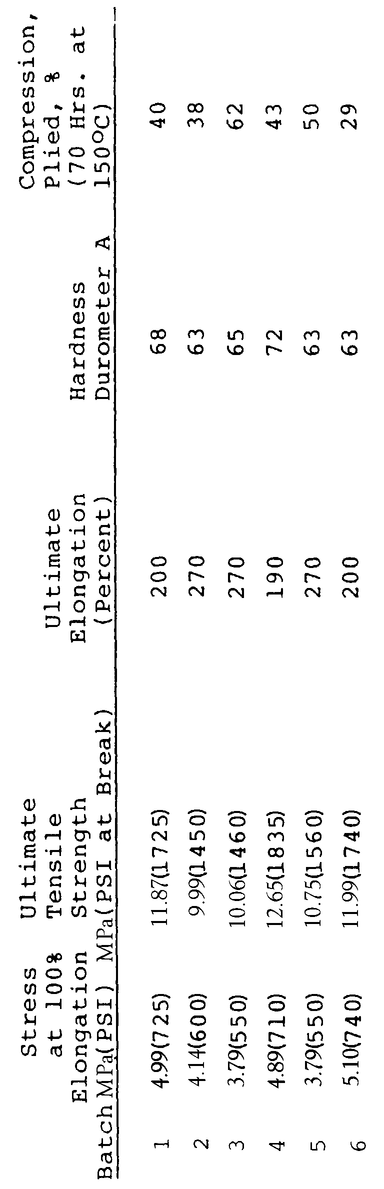

Based on Rheometer data, Mooney scorch, aging data and original physical properties, the cetyltrimethyl ammonium bromide and cetyldimethylethyl ammonium bromide provided the best balance of properties for the master batch formulation. Again, however, these properties will vary by employing retarders, etc. to prevent scorchiness and prevulcanization.

### EXAMPLE 3

The cetyltrimethyl ammonium bromide (not according to the invention) was employed to determine the Mooney scorch time as a function of temperature. The minimum viscosity, the t₅ value, t₃₅ value and viscosity at 31 minutes were determined for the cetyltrimethyl ammonium bromide at various temperatures as set forth below.

| Mooney Viscometer, Large Rotor | | | | | | | |
|---|---|---|---|---|---|---|---|
| Temp. °C | 70° | 80° | 85° | 90° | 93° | 100° | 125° |
| Min. Visc. | 81.0 | 71.6 | 60.3 | 54.9 | 58.0 | 54.7 | 46.7 |
| t₅ (min.) | >31 | >31 | >31 | 22.8 | 22.8 | 8.7 | 2.8 |
| t₃₅ (min.) | >31 | >31 | >31 | >31 | >31 | 15.1 | 3.7 |
| Visc. at 31 minutes | 81.0 | 72.0 | 62.2 | 67.0 | 84.2 | | |

Based upon the above results, the cetyltrimethyl ammonium bromide in a master batch formulation having 1 part of retarder incorporated therein will begin curing in a temperature range of 85°C to 90°C. Below this range the cetryltrimethyl ammonium bromide as a curative appears to be substantially inactive.

A similar test was performed substituting tetramethyl ammonium hydroxide pentahydrate for the cetyltrimethyl ammonium bromide (not according to the invention). The minimum viscosity, t₅ value, t₃₅ value and viscosity at 31 minutes were determined at various temperatures as set forth below.

| Mooney Viscometer, Large Rotor | | | | | |
|---|---|---|---|---|---|
| Temp. °C | 75° | 80° | 85° | 100° | 125°C |
| Min. Visc. | 71 | 66 | 62 | 59 | 56 |
| t₅ (min.) | - | 22.2 | 15.9 | 5 | 1.8 |
| t₃₅ (min.) | - | - | - | 8.8 | 2.3 |
| Visc. at 31 min. | 74 | 74 | 76 | - | - |

Based on the foregoing results, a threshold temperature at which curing begins is evidenced. The criterion for the temperature range at which curing starts is a 5 point or greater rise in the Mooney viscosity after 31 minutes. The threshold temperature for selected curatives are shown below.

| Curative | Threshold Temperature Range °C |
|---|---|
| Tetraphenylphosphonium bromide | 80-85 |
| Tetramethyl ammonium hydroxide pentahydrate* | 75-80 |
| Cetyldimethylethyl ammonium bromide* | 80-85 |
| Tetraphenylphosphonium chloride | 75-80 |

| | |
|---|---|
| *) not according to the invention | |

## Claims

1. A no-post-cure method of curing polyacrylate rubber having halogen and carboxyl cure sites, comprising:
mixing 0.1 to 25 parts by weight, per 100 parts by weight of rubber, of a curative with said polyacrylate rubber until a uniform vulcanizable composition results, said acrylate rubber comprising (a) from 40 percent to 99.8 percent by weight of an acrylate of the formula: 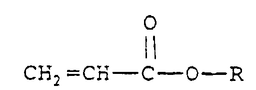 wherein R is selected from the group consisting of an alkyl radical containing 1 to 18 carbon atoms, an alkoxyalkyl, an alkylthioalkyl, and a cyanoalkyl radical containing 2 to 12 carbon atoms; (b) from 0.1 percent to 30 percent by weight of a halogen-containing monomer selected from the group consisting of halogen-containing vinylene hydrocarbons and halogen-containing vinyl monomers having the halogen group at least two carbon atoms removed from an oxygen group; (c) from 0.1 percent to 20 percent by weight of a carboxyl-containing monomer; and (d) up to 35 percent by weight of a copolymerizable monomer containing a terminal vinylidene group, said curative being a phosphonium quaternary salt of an acid selected from the group consisting of carboxylic acids containing from 2 to 24 carbon atoms and organophosphoric acids of the formula
(R-O)_{z}PO_{y}M
where M is the phosphonium quaternary salt, y equals 1 or 2, z equals 1 or 2, and y plus Z equals 3, and R is selected from the group consisting of alkyl radicals containing from 1 to 24 carbon atoms, and aryl radicals containing from 6 to 24 carbon atoms;
blending these components into a uniform composition below an activation temperature range prior to a curing step, and
heating during said curing step said composition above an activation temperature range which causes said composition to substantially cure whereby no-post-cure is necessary.

2. The method of claim 1, wherein said curative is selected from the class consisting of a phosphonium quaternary stearate salt.

3. The no-post-cure method of claims 1 or 2, said mixture having threshold temperature characteristics, said threshold temperature characteristics including a first area of uncured low minimum viscosity change being a change of less than 150 Mooney units measured at 100°C after a two week room temperature aging, said second area being a threshold temperature range being the temperature at which time t₅ value as measured by the Mooney Viscometer Large Rotor Test ASTM D1646 rises 5 points or more in 31 minutes and a third cured area where the cured composition has a cured completion as measured by plied, compression set ASTM D395 after 70 hours at 150°C of equal to or less than 80 percent.

4. The method of claims 1 to 3, including the further step of storing said composition below said activation temperature range after said mixing step and before said heating step, said storing step does not destroy the shelf stability of said composition.

5. The method of Claims 1 to 4, wherein said acrylate rubber comprises: (a) from 65% to 99.6% by weight of an acrylate, wherein R is selected from the group consisting of alkyl radicals containing 1 to 10 carbon atoms and alkoxyalkyl radicals containing 2 to 8 carbon atoms; (b) from 0.2% to 15% by weight of a halogen-containing monomer; (c) from 0.2% to 10% by weight to a carboxyl-containing monomer; and (d) up to 10% by weight of a copolymerizable monomer containing a terminal vinylidene group.

6. The method of Claim 5, wherein (a) is selected from the group consisting of ethyl acrylate, n-butyl acrylate, methoxyethyl acrylate, and ethoxyethyl acrylate, (b) is selected from the group consisting of vinyl chloroacetate, allyl chloroacetate, 2-chloroethyl acrylate, 2-chloroethyl vinyl ether, vinyl benzyl chloride, 5-chloromethyl-2-norbornene, and 5-chloroacetoxy-methyl-2-norbornene; (c) is selected from the group consisting of acrylic acid, methacrylic acid; and itaconic acid; and (d) is selected from the group consisting of vinyl acetate, methyl methacrylate, ethyl methacrylate, styrene, acrylonitrile, acrylamide, and diethylene glycol diacrylate.

7. The method of claims 2 to 6, wherein said curative comprises a phosphonium quaternary stearate salt of the formula: 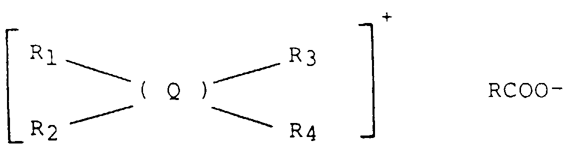 wherein Q is phosphorous, R₁, R₂, R₃, and R₄ are hydrocarbon radicals containing 1 to 18 carbon atoms such as alkyl, aryl, alkaryl, and aralkyl radicals, or wherein two or three of R₁, R₂, R₃, and R₄ form with the nitrogen or phosphorous atom a heterocyclic structure containing 3 to 8 atoms selected from the group consisting of carbon, nitrogen, oxygen and sulfur, wherein at least 2 atoms are carbon; and wherein RCOO⁻ is a stearate ion.

8. The method of Claim 7, wherein said phosphonium quaternary stearate salts are selected from the class consisting of trimethyl benzyl phosphonium stearate, trimethyl soya phosphonium stearate, tetramethyl phosphonium stearate, cetyl trimethyl phosphonium stearate, and dimethyl phenyl benzyl phosphonium stearate.

9. A no-post-cure method of curing polyacrylate rubber having halogen and carboxyl cure sites, comprising:
mixing 0.5 to 25 parts by weight, per 100 parts by weight of rubber, of a curative with said polyacrylate rubber until a uniform vulcanizable composition results, said acrylate rubber comprising (a) from 40 percent to 99.8 percent by weight of an acrylate of the formula: 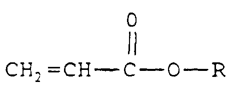 wherein R is selected from the group consisting of an alkyl radical containing 1 to 18 carbon atoms, an alkoxyalkyl, an alkylthioalkyl, and a cyanoalkyl radical containing 2 to 12 carbon atoms: (b) from 0.1 percent to 30 percent by weight of a halogen-containing monomer selected from the group consisting of halogen-containing vinylene hydrocarbons and halogen-containing vinyl monomers having the halogen group at least two carbon atoms removed from an oxygen group; (c) from 0.1 percent to 20 percent by weight of a carboxyl-containing monomer; and (d) up to 35 percent by weight of a copolymerizable monomer containing a terminal vinylidene group, said curative comprising a metallic acid salt and a quaternary salt, said metallic acid salt being selected from the group consisting of carboxylic acids containing from 2 to 24 carbon atoms and organophosphoric acids of the formula
(R-O)_{z}PO_{y}M
where M is an alkali metal, y equals 1 or 2, z equals 1 or 2, and y plus z equals 3, and R is selected from the group consisting of alkyl radical containing from 1 to 24 carbon atoms, and aryl radical containing from 6 to 24 carbon atoms and said quaternary salt being phosphonium quaternary salt of an anion X where X is an anion of an organic or inorganic acid wherein the acidic hydrogen is associated with a halogen or an oxygen atom;
blending these components into a uniform composition below an activation temperature range prior to a curing step and
heating during said curing step said composition above an activation temperature range which causes said composition to substantially cure whereby no post-cure is necessary.

10. The method of claim 9, wherein said curative comprising a metallic stearate and a quaternary salt selected from the class consisting of a phosphonium quaternary halogen salt, and a phosphonium quaternary hydroxide salt.

11. The no-post-cure method of claims 9 or 10, said mixture having threshold temperature characteristics, said threshold temperature characteristics including a first area of uncured low minimum viscosity change being a change of less than 150 Mooney units measured at 100°C after a two week room temperature aging, said second area being a threshold temperature range being the temperature at which time t₅ value as measured by the Mooney Viscometer Large Rotor Test ASTM D1646 rises 5 points or more in 31 minutes and a third cured area where the cured composition has a cured completion as measured by plied, compression set ASTM D395 after 70 hours at 150°C of equal or less than 80 percent.

12. The method of Claims 9 to 11, further including the step of storing said composition below said activation temperature range after said mixing step and before said heating step, said storing step does not destroy the shelf stability of said composition.

13. The method of Claims 9 to 12, wherein said acrylate rubber comprises: (a) from 65% to 99.6% by weight of an acrylate, wherein R is selected from the group consisting of alkyl radicals containing 1 to 10 carbon atoms and alkoxyalkyl radicals containing 2 to 8 carbon atoms; (b) from 0.2% to 15% by weight of a halogen-containing monomer; (c) from 0.2 to 10% by weight to a carboxyl-containing monomer; and (d) up to 10% by weight of a copolymerizable monomer containing a terminal vinylidene group.

14. The method of Claim 13, wherein (a) is selected from the group consisting of ethyl acrylate, n-butyl acrylate, methoxyethyl acrylate, and ethoxyethyl acrylate; (b) is selected from the group consisting of vinyl chloroacetate, allyl chloroacetate, 2-chloroethyl acrylate, 2-chloroethyl vinyl ether, vinyl benzyl chloride, 5-chloromethyl-2-norbornene, and 5-chloroacetoxymethyl-2-norbornene; (c) is selected from the group consisting of acrylic acid, methacrylic acid; and itaconic acid; and (d) is selected from the group consisting of vinyl acetate, methyl methacrylate, ethyl methacrylate, styrene, acrylonitrile, acrylamide, and diethylene glycol diacrylate.

15. The method of Claims 10 to 14, wherein said curative comprises a quaternary salt of the formula: 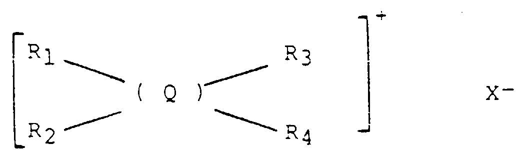 wherein Q is phosphorous, R₁, R₂, R₃, and R₄ are hydrocarbon radicals, containing 1 to 18 carbon atoms such as alkyl, aryl, alkaryl, aralkyl radicals, or wherein two or three of the R₁, R₂, R₃, and R₄ form with nitrogen or phosphorous atom a heterocyclic structure containing 3 to 8 atoms selected from the group consisting of carbon, nitrogen, oxygen and sulfur, wherein at least two atoms are carbon; and X is an ion such as chloride (Cl⁻), bromine (Br⁻), iodine (I⁻), or hydroxide (OH⁻).

16. The method of Claim 10, wherein said metallic stearate is selected from the class consisting of sodium stearate or potassium stearate.

17. The method of Claim 15, wherein said quaternary phosphonium salts are selected from the class consisting of tetraphenyl phosphonium bromide, hexadecyltributyl phosphonium bromide, tetraphenyl phosphonium chloride, tetraphenyl phosphonium iodide, tetrabutyl phosphonium chloride, tetrabutyl phosphonium bromide, triphenylbenzyl phosphonium chloride, triphenylbenzyl phosphonium bromide, triphenylbenzyl phosphonium iodide, triphenylmethoxymethyl phosphonium chloride, triethylbenzyl phosphonium chloride, and tricyclohexylbenzyl phosphonium chloride.

18. A method of Claim 9 wherein Xis selected from the group consisting of Cl⁻, Br⁻, I⁻, HSO₄⁻, H₂PO₄⁻, RCOO⁻, ROSO₃⁻, RSO₃⁻, and ROPO₃H⁻ where R is an alkyl or alkaryl radical containing 1 to 18 carbon atoms.

19. The method of Claim 3, wherein said first area of uncured low minimum viscosity change is a change of less than 5 Mooney units measured at 100°C after an eight week room temperature aging and said third cured area has a cure completion equal to or less than 40%.

20. A method of Claim 11, wherein said first area of uncured low minimum viscosity change is a change of less than 5 Mooney units measured at 100°C after an eight week room temperature aging and said third cured area has a cure completion as measured by compression set equal to or less than 40%.

## Patentansprüche

1. Nicht-Nachhärtungs-Verfahren zum Härten von Polyacrylat-Kautschuk, der Halogen- und Carboxyl-Härtungsstellen aufweist, umfassend:
das Vermischen von 0,1 bis 25 Gewichtsteilen, pro 100 Gewichtsteile Kautschuk, eines Härtungsmittels mit dem Polyacrylat-Kautschuk, bis sich eine gleichmäßige, vulkanisierbare Zusammensetzung ergibt, wobei der Acrylat-Kautschuk umfaßt: (a) 40 bis 99,8 Gew.-% eines Acrylats der Formel: 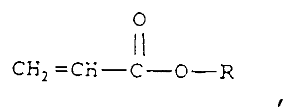 worin R aus der Gruppe ausgewählt ist, die aus einem Alkylrest mit 1 bis 18 Kohlenstoffatomen, einem Alkoxyalkyl-, einem Alkylthioalkyl- und einem Cyanoalkyl-Rest mit 2 bis 12 Kohlenstoffatomen besteht; (b) 0,1 bis 30 Gew.-% eines Halogen enthaltenden Monomers, das aus der Gruppe ausgewählt ist, die aus Halogen enthaltenden Vinylen-Kohlenwasserstoffen und Halogen enthaltenden Vinyl-Monomeren besteht, bei denen die Halogen-Gruppe wenigstens 2 Kohlenstoffatome von einer Sauerstoff-Gruppe entfernt ist; (c) 0,1 bis 20 Gew.-% eines Carboxyl enthaltenden Monomers, und (d) bis zu 35 Gew.-% eines copolymerisierbaren Monomers, das eine terminale Vinyliden-gruppe enthält, wobei das Härtungsmittel ein quartäres Phosphoniumsalz einer Säure ist, die aus der Gruppe ausgewählt ist, die aus Carbonsäuren mit 2 bis 24 Kohlenstoffatomen und Organophosphorsäuren der Formel
(R-O)_{z}PO_{y}M
besteht, worin M das quartäre Phosphoniumsalz ist, y gleich 1 oder 2 ist, z gleich 1 oder 2 ist und y + z gleich 3 ist, und R aus der Gruppe ausgewählt ist, die aus Alkylresten mit 1 bis 24 Kohlenstoffatomen und Arylresten mit 6 bis 24 Kohlenstoffatomen besteht;
das Vermischen dieser Komponenten vor der Härtungsstufe unterhalb des Aktivierungstemperaturbereichs zu einer gleichförmigen Zusammensetzung, und
das Erwärmen dieser Zusammensetzung während der Härtungsstufe oberhalb des Aktivierungstemperaturbereichs, wodurch im wesentlichen ein Härten der Zusammensetzung bewirkt wird, ohne daß ein Nachhärten notwendig ist.

2. Verfahren gemäß Anspruch 1, worin das Härtungsmittel aus der Klasse ausgewählt wird, die aus einem quartären Phosphoniumstearatsalz besteht.

3. Nicht-Nachhärtungs-Verfahren gemäß den Ansprüchen 1 oder 2, worin die Mischung Schwellentemperatur-Eigenschaften aufweist, wobei die Schwellentemperatur-Eigenschaften einschließen: einen ersten Bereich einer geringen Minimaländerung der Viskosität im ungehärteten Zustand, die eine Änderung von weniger als 150 Mooney-Einheiten darstellt, gemessen bei 100 °C nach einer Alterung von 2 Wochen bei Raumtemperatur, einen zweiten Bereich, der ein Schwellentemperatursbereich ist, der die Temperatur ist, bei der der Zeitwert t₅, gemessen durch den Mooney Viscometer Large Rotor Test ASTM D1646, um 5 Stellen oder mehr in 31 Minuten ansteigt, und einen dritten gehärteten Bereich, worin die gehärtete Zusammensetzung eine Vervollständigung der Härtung, gemessen durch den Biege-Druckverformungsrest-Test ASTM D395 nach 70 Stunden bei 150 °C, von gleich oder weniger 80 % hat.

4. Verfahren gemäß den Ansprüchen 1 bis 3, das weiterhin die Stufe der Lagerung der Zusammensetzung unterhalb des Aktivierungstemperaturbereichs nach der Vermischungsstufe und vor der Erwärmungsstufe einschließt, wobei die Lagerungsstufe nicht die Lagerbeständigkeit der Zusammensetzung zerstört.

5. Verfahren gemäß den Ansprüchen 1 bis 4, worin der Acrylat-Kautschuk umfaßt: (a) 65 bis 99,6 Gew.-% eines Acrylats, worin R aus der Gruppe ausgewählt ist, die aus Alkylresten mit 1 bis 10 Kohlenstoffatomen und Alkoxyalkyl-Resten mit 2 bis 8 Kohlenstoffatomen besteht; (b) 0,2 bis 15 Gew.-% eines Halogen enthaltenden Monomers; (c) 0,2 bis 10 Gew.-% eines Carboxyl enthaltenden Monomers; und (d) bis zu 10 Gew.-% eines copolymerisierbaren Monomers, das eine terminale Vinyliden-Gruppe enthält.

6. Verfahren gemäß Anspruch 5, worin (a) aus der Gruppe ausgewählt ist, bestehend aus Ethylacrylat, n-Butylacrylat, Methoxyethylacrylat und Ethoxyethylacrylat, (b) aus der Gruppe ausgewählt ist, bestehend aus Vinylchloracetat, Allylchloracetat, 2-Chlorethylacrylat, 2-Chlorethylvinylether, Vinylbenzylchlorid, 5-Chlormethyl-2-norbornen und 5-Chloracetoxymethyl-2-norbornen; (c) aus der Gruppe ausgewählt ist, bestehend aus Acrylsäure, Methacrylsäure und Itaconsäure; und (d) aus der Gruppe ausgewählt ist, bestehend aus Vinylacetat, Methylmethacrylat, Ethylmethacrylat, Styrol, Acrylnitril, Acrylamid und Diethylenglycoldiacrylat.

7. Verfahren gemäß den Ansprüchen 2 bis 6, worin das Härtungsmittel ein quartäres Phosphoniumstearatsalz der Formel: 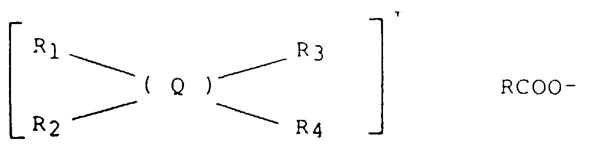 umfaßt, worin Q Phosphor ist, R₁, R₂, R₃ und R₄ Kohlenwasserstoff-Reste mit 1 bis 18 Kohlenstoffatomen sind, wie Alkyl-, Aryl-, Alkaryl- und Aralkyl-Reste, oder worin zwei oder drei der Reste R₁, R₂, R₃ und R₄ mit dem Stickstoff- oder Phosphoratom eine heterocyclische Struktur bilden, die 3 bis 8 Atome enthält, ausgewählt aus der Gruppe, bestehend aus Kohlenstoff, Stickstoff, Sauerstoff und Schwefel, worin wenigstens 2 Atome Kohlenstoff sind; und worin RCOO⁻ ein Stearation ist.

8. Verfahren gemäß Anspruch 7, worin die quartären Phosphoniumstearatsalze aus der Klasse ausgewählt sind, bestehend aus Trimethylbenzylphosphoniumstearat, Trimethyl-Sojaphosphoniumstearat, Tetramethylphosphoniumstearat, Cetyltrimethylphosphoniumstearat und Dimethylphenylbenzylphosphoniumstearat.

9. Nicht-Nachhärtungs-Verfahren zum Härten von Polyacrylat-Kautschuk, der Halogen- und Carboxyl-Härtungsstellen aufweist, umfassend:
das Vermischen von 0,5 bis 25 Gewichtsteilen, pro 100 Gewichtsteile Kautschuk, eines Härtungsmittels mit dem Polyacrylat-Kautschuk, bis sich eine gleichmäßige, vulkanisierbare Zusammensetzung ergibt, wobei der Acrylat-Kautschuk umfaßt: (a) 40 bis 99,8 Gew.-% eines Acrylats der Formel: 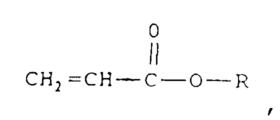 worin R aus der Gruppe ausgewählt ist, bestehend aus einem Alkylrest mit 1 bis 18 Kohlenstoffatomen, einem Alkoxyalkyl-, einem Alkylthioalkyl- und einem Cyanoalkyl-Rest mit 2 bis 12 Kohlenstoffatomen, (b) 0,1 bis 30 Gew.-% eines Halogen enthaltenden Monomers, das aus der Gruppe ausgewählt ist, die aus Halogen enthaltenden Vinylen-Kohlenwasserstoffen und Halogen enthaltenden Vinyl-Monomeren besteht, bei denen die Halogen-Gruppe wenigstens 2 Kohlenstoffatome von einer Sauerstoff-Gruppe entfernt ist; (c) 0,1 bis 20 Gew.-% eines Carboxyl enthaltenden Monomers, und (d) bis zu 35 Gew.-% eines copolymerisierbaren Monomers, das eine terminale Vinyliden-gruppe enthält, wobei das Härtungsmittel ein Metallsalz einer Säure und ein quartäres Salz umfaßt, wobei das Metallsalz einer Säure aus der Gruppe ausgewählt ist, die aus Carbonsäuren mit 2 bis 24 Kohlenstoffatomen und Organophosphorsäuren der Formel
(R-O)_{z}PO_{y}M
besteht, worin M ein Alkalimetall ist, y gleich 1 oder 2 ist, z gleich 1 oder 2 ist und y + z gleich 3 ist, und R aus der Gruppe ausgewählt ist, die aus Alkylresten mit 1 bis 24 Kohlenstoffatomen und Arylresten mit 6 bis 24 Kohlenstoffatomen besteht, und das quartäre Salz ein quartäres Phosphoniumsalz eines Anions X ist, worin X ein Anion einer organischen oder anorganischen Säure ist, worin der acide Wasserstoff mit einem Halogen- oder einem Sauerstoffatom verbunden ist;
das Vermischen dieser Komponenten vor der Härtungsstufe unterhalb des Aktivierungstemperaturbereichs zu einer gleichförmigen Zusammensetzung, und
das Erwärmen dieser Zusammensetzung während der Härtungsstufe oberhalb des Aktivierungstemperaturbereichs, wodurch im wesentlichen ein Härten der Zusammensetzung bewirkt wird, ohne daß ein Nachhärten notwendig ist.

10. Verfahren gemäß Anspruch 9, worin das Härtungsmittel ein Metallstearat und ein quartäres Salz umfaßt, ausgewählt aus der Klasse, die aus einem quartären Phosphoniumhalogenidsalz und einem quartären Phosphoniumhydroxidsalz besteht.

11. Nicht-Nachhärtungs-Verfahren gemäß den Ansprüchen 9 oder 10, worin die Mischung Schwellentemperatur-Eigenschaften aufweist, wobei die Schwellentemperatur-Eigenschaften einschließen: einen ersten Bereich einer geringen Minimaländerung der Viskosität im ungehärteten Zustand, die eine Änderung von weniger als 150 Mooney-Einheiten darstellt, gemessen bei 100 °C nach einer Alterung von 2 Wochen bei Raumtemperatur, einen zweiten Bereich, der ein Schwellentemperatursbereich ist, der die Temperatur ist, bei der der Zeitwert t₅, gemessen durch den Mooney Viscometer Large Rotor Test ASTM D1646, um 5 Stellen oder mehr in 31 Minuten ansteigt, und einen dritten gehärteten Bereich, worin die gehärtete Zusammensetzung eine Vervollständigung der Härtung, gemessen durch den Biege-Druckverformungsrest-Test ASTM D395 nach 70 Stunden bei 150 °C, von gleich oder weniger 80 % hat.

12. Verfahren gemäß den Ansprüchen 9 bis 11, das weiterhin die Stufe der Lagerung der Zusammensetzung unterhalb des Aktivierungstemperaturbereichs nach der Vermischungsstufe und vor der Erwärmungsstufe einschließt, wobei die Lagerungsstufe nicht die Lagerbeständigkeit der Zusammensetzung zerstört.

13. Verfahren gemäß den Ansprüchen 9 bis 12, worin der Acrylat-Kautschuk umfaßt: (a) 65 bis 99,6 Gew.-% eines Acrylats, worin R aus der Gruppe ausgewählt ist, die aus Alkylresten mit 1 bis 10 Kohlenstoffatomen und Alkoxyalkyl-Resten mit 2 bis 8 Kohlenstoffatomen besteht; (b) 0,2 bis 15 Gew.-% eines Halogen enthaltenden Monomers; (c) 0,2 bis 10 Gew.-% eines Carboxyl enthaltenden Monomers; und (d) bis zu 10 Gew.-% eines copolymerisierbaren Monomers, das eine terminale Vinyliden-Gruppe enthält.

14. Verfahren gemäß Anspruch 13, worin (a) aus der Gruppe ausgewählt ist, bestehend aus Ethylacrylat, n-Butylacrylat, Methoxyethylacrylat und Ethoxyethylacrylat, (b) aus der Gruppe ausgewählt ist, bestehend aus Vinylchloracetat, Allylchloracetat, 2-Chlorethylacrylat, 2-Chlorethylvinylether, Vinylbenzylchlorid, 5-Chlormethyl-2-norbornen und 5-Chloracetoxymethyl-2-norbornen; (c) aus der Gruppe ausgewählt ist, bestehend aus Acrylsäure, Methacrylsäure und Itaconsäure; und (d) aus der Gruppe ausgewählt ist, bestehend aus Vinylacetat, Methylmethacrylat, Ethylmethacrylat, Styrol, Acrylnitril, Acrylamid und Diethylenglycoldiacrylat.

15. Verfahren gemäß den Ansprüchen 10 bis 14, worin das Härtungsmittel ein quartäres Salz der Formel: 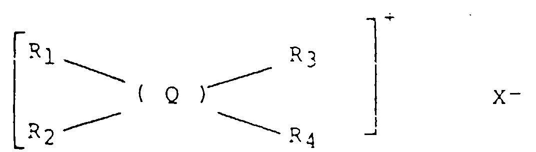 umfaßt, worin Q Phosphor ist, R₁, R₂, R₃ und R₄ Kohlenwasserstoff-Reste mit 1 bis 18 Kohlenstoffatomen sind, wie Alkyl-, Aryl-, Alkaryl- und Aralkyl-Reste, oder worin zwei oder drei der Reste R₁, R₂, R₃ und R₄ mit dem Stickstoff- oder Phosphoratom eine heterocyclische Struktur bilden, die 3 bis 8 Atome enthält, ausgewählt aus der Gruppe, bestehend aus Kohlenstoff, Stickstoff, Sauerstoff und Schwefel, worin wenigstens zwei Atome Kohlenstoff sind; und worin X ein Ion, wie Chlorid (Cl⁻), Bromid (Br⁻), Iodid (I⁻) oder Hydroxid (OH⁻) ist.

16. Verfahren gemäß Anspruch 10, worin das Metallstearat aus der Klasse ausgewählt ist, die aus Natriumstearat oder Kaliumstearat besteht.

17. Verfahren gemäß Anspruch 15, worin die quartären Phosphoniumsalze aus der Klasse ausgewählt sind, bestehend aus Tetraphenylphosphoniumbromid, Hexadecyltributylphosphoniumbromid, Tetraphenylphosphoniumchlorid, Tetraphenylphosphoniumiodid, Tetrabutylphosphoniumchlorid, Tetrabutylphosphoniumbromid, Triphenylbenzylphosphoniumchlorid, Triphenylbenzylphosphoniumbromid, Triphenylbenzylphosphoniumiodid, Triphenylmethoxymethylphosphoniumchlorid, Triethylbenzylphosphoniumchlorid und Tricyclohexylbenzylphosphoniumchlorid.

18. Verfahren gemäß Anspruch 9, worin X aus der Gruppe ausgewählt ist, die aus Cl⁻, Br⁻, I⁻, HSO₄⁻, H₂PO₄⁻, RCOO⁻, ROSO₃⁻, RSO₃⁻ und ROPO₃H⁻ besteht, worin R ein Alkyl- oder Alkarylrest mit 1 bis 18 Kohlenstoffatomen ist.

19. Verfahren gemäß Anspruch 3, worin der erste Bereich einer geringen Minimaländerung der Viskosität im ungehärteten Zustand eine Änderung von weniger als 5 Mooney-Einheiten ist, gemessen bei 100 °C nach einer achtwöchigen Alterung bei Raumtemperatur, und der dritte gehärtete Bereich eine Härtungsvervollständigung von gleich oder weniger als 40 % hat.

20. Verfahren gemäß Anspruch 11, worin der erste Bereich einer geringen Minimaländerung der Viskosität im ungehärteten Zustand eine Änderung von weniger als 5 Mooney-Einheiten ist, gemessen bei 100 °C nach einer achtwöchigen Alterung bei Raumtemperatur, und der dritte gehärtete Bereich eine Härtungsvervollständigung, gemessen durch den Druckverformungsrest, von gleich oder weniger als 40 % hat.

## Revendications

1. Procédé sans post-durcissement de durcissement d'un caoutchouc de polyacrylate ayant des sites de durcissement d'halogène et de carboxyle, comprenant les étapes suivantes :
on mélange 0,1 à 25 parties en poids, par 100 parties en poids de caoutchouc, d'un agent durcissant avec ledit caoutchouc de polyacrylate jusqu'à ce que l'on obtienne une composition vulcanisable uniforme, ledit caoutchouc d'acrylate comprenant
(a) 40 à 99,8% en poids d'un acrylate de formule : 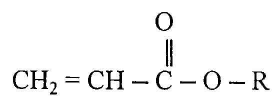 dans laquelle R est sélectionné dans le groupe comprenant un radical alkyle contenant 1 à 18 atomes de carbone, un groupe alcoxyalkyle, un groupe alkylthioalkyle et un radical cyanoalkyle contenant 2 à 12 atomes de carbone;
(b) 0,1 à 30% en poids d'un monomère à teneur en halogène sélectionné dans le groupe comprenant des hydrocarbures de vinylène à teneur en halogène et des monomères de vinyle à teneur en halogène dans lesquels au moins deux atomes de carbone séparent le groupe halogène d'un groupe oxygène;
(c) 0,1 à 20% en poids d'un monomère contenant un groupe carboxyle; et
(d) jusqu'à 35% en poids d'un monomère copolymérisable contenant un groupe vinylidène terminal, ledit agent durcissant étant un sel quaternaire de phosphonium d'un acide sélectionné dans le groupe comprenant des acides carboxyliques contenant 2 à 24 atomes de carbone et des acides organophophoriques de formule :
(R-O)_{z}PO_{y}M
dans laquelle M est un sel quaternaire de phosphonium, y est égal à 1 ou à 2, z est égal à 1 ou 2 et la somme y plus z est égale à 3, et R est sélectionné dans le groupe comprenant des radicaux alkyle contenant 1 à 24 atomes de carbone et des radicaux aryle contenant 6 à 24 atomes de carbone;
on mélange ces composants jusqu'à ce que l'on obtienne une composition uniforme en dessous d'une plage de températures d'activation avant une étape de durcissement, et
on chauffe, au cours de ladite étape de durcissement, ladite composition au-dessus d'une plage de températures d'activation qui amène ladite composition à durcir sensiblement si bien qu'aucun post-durcissement n'est nécessaire.

2. Procédé selon la revendication 1, dans lequel ledit agent durcissant est sélectionné dans le groupe constitué par les sels de stéarate de phosphonium quaternaire.

3. Procédé sans post-durcissement selon la revendication 1 ou 2, ledit mélange ayant des caractéristiques de température de seuil, lesdites caractéristiques de température de seuil comprenant une première zone de variation de viscosité minimale faible sans durcissement qui est une variation de moins de 150 unités Mooney mesurée à 100°C après un vieillissement à température ambiante de deux semaines, ladite deuxième zone étant une plage de températures de seuil qui est la température à laquelle la valeur de temps t₅, telle que mesurée par l'essai à grand rotor du viscosimètre Mooney ASTM D1646 augmente de 5 points ou davantage en 31 minutes et une troisième zone de durcissement dans laquelle la composition durcie a un degré de durcissement, tel que mesuré par l'appareil de compression par flexion ASTM D395, après 70 heures à 150°C, égal ou inférieur à 80%.

4. Procédé selon les revendications 1 à 3, comprenant une autre étape de stockage de ladite composition en dessous de ladite plage de températures d'activation après ladite étape de mélange et avant ladite étape de chauffage, ladite étape de stockage ne détruisant pas la stabilité au stockage de ladite composition.

5. Procédé selon les revendications 1 à 4, dans lequel ledit caoutchouc d'acrylate comprend (a) 65 à 99,6% en poids d'un acrylate, dans lequel R est sélectionné dans le groupe constitué des radicaux alkyle contenant 1 à 10 atomes de carbone et des radicaux alcoxyalkyle contenant 2 à 8 atomes de carbone; (b) 0,2 à 15% en poids d'un monomère à teneur en halogène; (c) 0,2 à 10% en poids d'un monomère contenant un ou des groupe(s) carboxyle; et (d) jusqu'à 10% en poids d'un monomère copolymérisable contenant un groupe vinylidène terminal.

6. Procédé selon la revendication 5, dans lequel (a) est sélectionné dans le groupe comprenant l'acrylate d'éthyle, l'acrylate de n-butyle, l'acrylate de méthoxyéthyle et l'acrylate d'éthoxyéthyle; (b) est sélectionné dans le groupe comprenant le chloracétate de vinyle, le chloracétate d'allyle, l'acrylate de 2-chloréthyle, le vinyl éther de 2-chloréthyle, le chlorure de vinyl benzyle, le 5-chlorométhyl-2-norbornène et le 5-chloracétoxyméthyl-2-norbornène; (c) est sélectionné dans le groupe comprenant l'acide acrylique, l'acide méthacrylique et l'acide itaconique; et (d) est sélectionné dans le groupe comprenant l'acétate de vinyle, le méthacrylate de méthyle, le méthacrylate d'éthyle, le styrène, l'acrylonitrile, l'acrylamide et le diacrylate de diéthylène glycol.

7. Procédé selon les revendications 2 à 6, dans lequel ledit agent durcissant comprend un sel de stéarate de phosphonium quaternaire de formule : 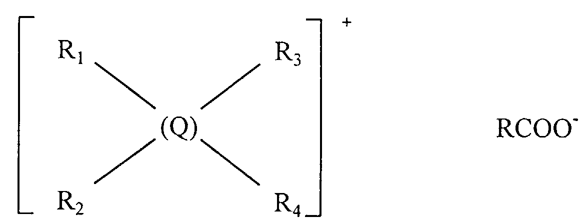 dans laquelle Q est du phosphore, R₁, R₂, R₃ et R₄ sont des radicaux hydrocarbure contenant 1 à 18 atomes de carbone, notamment les radicaux alkyle, aryle, alcaryle et aralkyle, ou dans laquelle deux ou trois des groupes R₁, R₂, R₃ et R₄ forment avec l'atome d'azote ou de phosphore une structure hétérocyclique contenant 3 à 8 atomes sélectionnés dans le groupe comprenant le carbone, l'azote, l'oxygène et le soufre, dont au moins deux atomes sont des atomes de carbone; et dans laquelle RCOO- est un ion de stéarate.

8. Procédé selon la revendication 7, dans lequel lesdits sels de stéarates de phosphonium quaternaire sont sélectionnés dans le groupe comprenant le stéarate de triméthyl benzyl phosphonium, le stéarate de triméthyl soja phosphonium, le stéarate de tétraméthyl phosphonium, le stéarate de cétyl triméthyl phosphonium et le stéarate de diméthyl phényl benzyl phosphonium.

9. Procédé sans post-durcissement de durcissement de caoutchouc de polyacrylate ayant des sites de durcissement d'halogène et de carboxyle, comprenant les étapes suivantes :
on mélange 0,2 à 25 parties en poids, par 100 parties en poids de caoutchouc, d'un agent durcissant avec ledit caoutchouc de polyacrylate jusqu'à ce que l'on obtienne une composition vulcanisable uniforme, ledit caoutchouc d'acrylate comprenant
(a) 40 à 99,8% en poids d'un acrylate de formule : 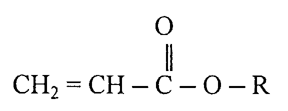 dans laquelle R est sélectionné dans le groupe comprenant un radical alkyle contenant 1 à 18 atomes de carbone, un radical alcoxyalkyle, un radical alkylthioalkyle et un radical cyanoalkyle contenant 2 à 12 atomes de carbone;
(b) 0,1 à 30% en poids d'un monomère à teneur en halogène sélectionné dans le groupe comprenant des hydrocarbures de vinylène à teneur en halogène et des monomères de vinyle à teneur en halogène dans lesquels au moins 2 atomes de carbone séparent le groupe halogène d'un groupe oxygène;
(c) 0,1 à 20% en poids d'un monomère contenant un ou des groupe(s) carboxyle; et
(d) jusqu'à 35% en poids d'un monomère copolymérisable contenant un groupe vinylidène terminal, ledit agent durcissant comprenant un sel d'acide métallique et un sel quaternaire, ledit sel d'acide métallique étant sélectionné dans le groupe comprenant des acides carboxyliques contenant 2 à 24 atomes de carbone et des acides organophosphoriques de formule :
(R-O)_{z}PO_{y}M
dans laquelle M est un métal alcalin, y est égal à 1 ou à 2, z est égal à 1 ou à 2 et la somme y + z est égale à 3, et R est sélectionné dans le groupe comprenant un radical alkyle contenant 1 à 24 atomes de carbone et un radical aryle contenant 6 à 24 atomes de carbone, et ledit sel quaternaire étant un sel de phosphonium quaternaire d'un anion X où X est un anion d'un acide organique ou minéral, dans lequel l'hydrogène acide est associé à un atome d'halogène ou à un atome d'oxygène;
on mélange lesdits composants pour former une composition uniforme en dessous d'une plage de températures d'activation avant une étape de durcissement, et
on chauffe, au cours de ladite étape de durcissement, ladite composition au-dessus d'une plage de températures d'activation qui amène ladite composition à durcir sensiblement sans qu'aucun post-durcissement ne soit nécessaire.

10. Procédé selon la revendication 9, dans lequel ledit agent durcissant comprend un stéarate métallique et un sel quaternaire sélectionné dans la classe comprenant un sel d'halogène de phosphonium quaternaire et un sel d'hydroxyde quaternaire de phosphonium.

11. Procédé sans post-durcissement selon la revendication 9 ou 10, ledit mélange ayant des caractéristiques de température de seuil, lesdites caractéristiques de température de seuil comprenant une première zone de variation de viscosité minimale faible sans durcissement qui constitue une variation de moins de 150 unités Mooney mesurée à 100°C après un vieillissement à température ambiante de deux semaines, ladite deuxième zone étant une plage de températures de seuil qui est la température à laquelle la valeur de temps t₅, telle que mesurée par le test à grand rotor du viscosimètre Mooney ASTM D1646 augmente de 5 points ou davantage en 31 minutes et une troisième zone de durcissement où la composition durcie a un degré de durcissement, tel que mesuré par l'appareil de compression par flexion ASTM D395, après 70 heures à 150°C, égal ou inférieur à 80%.

12. Procédé selon les revendications 9 à 11, comprenant par ailleurs l'étape de stockage de ladite composition en dessous de ladite plage de températures d'activation après ladite étape de mélange et avant ladite étape de chauffage, ladite étape de stockage ne détruisant pas la stabilité au stockage de ladite composition.

13. Procédé selon les revendications 9 à 12, dans lequel ledit caoutchouc d'acrylate comprend (a) 65 à 99,6% en poids d'un acrylate, dans lequel R est sélectionné dans le groupe comprenant des radicaux alkyle contenant 1 à 10 atomes de carbone et des radicaux alcoxyalkyle contenant 2 à 8 atomes de carbone; (b) 0,2 à 15% en poids d'un monomère à teneur en halogène; (c) 0,2 à 10% en poids d'un monomère contenant un ou des groupe(s) carboxyle; et (d) jusqu'à 10% en poids d'un monomère copolymérisable contenant un groupe vinylidène terminal.

14. Procédé selon la revendication 13, dans lequel (a) est sélectionné dans le groupe comprenant l'acrylate d'éthyle, l'acrylate de n-butyle, l'acrylate de méthoxyéthyle et l'acrylate d'éthoxyéthyle; (b) est sélectionné dans le groupe comprenant le chloracétate de vinyle, le chloracétate d'allyle, l'acrylate de 2-chloréthyle, le vinyl éther de 2-chloréthyle, le chlorure de vinyl benzyle, le 5-chlorométhyl-2-norbornène et le 5-chloracétoxyméthyl-2-norbornène: (c) est sélectionné dans le groupe comprenant l'acide acrylique, l'acide méthacrylique et l'acide itaconique; et (d) est sélectionné dans le groupe comprenant l'acétate de vinyle, le méthacrylate de méthyle, le méthacrylate d'éthyle, le styrène, l'acrylonitrile, l'acrylamide et le diacrylate de diéthylène glycol.

15. Procédé selon les revendications 10 à 14, dans lequel ledit agent durcissant comprend un sel quaternaire de formule; 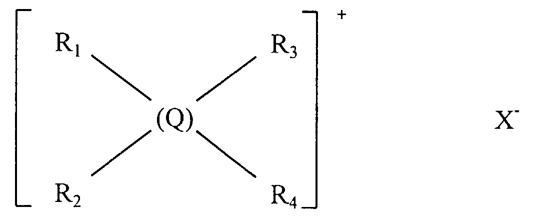 dans laquelle Q est du phosphore, R₁, R₂, R₃ et R₄ sont des radicaux hydrocarbure contenant 1 à 18 atomes de carbone, notamment les groupes alkyle, aryle, alcaryle, aralkyle, ou dans laquelle deux ou trois des groupes R₁, R₂, R₃ et R₄ forment avec un atome d'azote ou de phosphore une structure hétérocyclique contenant 3 à 8 atomes de carbone sélectionnés dans le groupe comprenant le carbone, l'azote, l'oxygène et le soufre, où au moins 2 atomes sont du carbone; et X est un ion tel que le chlorure (Cl⁻), le bromure (Br⁻), l'iodure (I⁻) ou l'hydroxyde (OH⁻).

16. Procédé selon la revendication 10, dans lequel ledit stéarate métallique est sélectionné dans la classe comprenant le stéarate de sodium ou le stéarate de potassium.

17. Procédé selon la revendication 15, dans lequel lesdits sels de phosphonium quaternaire sont sélectionnés dans la classe comprenant le bromure de tétraphényl phosphonium, le bromure d'hexadécyl tributyl phosphonium, le chlorure de tétraphényl phosphonium, l'iodure de tétraphényl phosphonium, le chlorure de tétrabutyl phosphonium, le bromure de tétrabutyl phosphonium, le chlorure de triphénylbenzyl phosphonium, le bromure de triphénylbenzyl phosphonium, l'iodure de triphénylbenzyl phosphonium, le chlorure de triphényl méthoxyméthyl phosphonium, le chlorure de triéthylbenzyl phosphonium et le chlorure de tricyclohexylbenzyl phosphonium.

18. Procédé selon la revendication 9, dans lequel X est sélectionné dans le groupe comprenant Cl⁻, Br⁻, I⁻, HSO₄⁻, H₂PO₄⁻, RCOO⁻, ROSO₃⁻, RSO₃⁻ et ROPO₃H⁻, où R est un groupe alkyle ou alcaryle contenant 1 à 18 atomes de carbone.

19. Procédé selon la revendication 3, dans lequel ladite première zone de la variation de viscosité minimale faible sans durcissement est une variation de moins de 5 unités Mooney mesurée à 100°C après un vieillissement à température ambiante de huit semaines et ladite troisième zone de durcissement a un degré de durcissement égal ou inférieur à 40%.

20. Procédé selon la revendication 11, dans lequel ladite première zone de variation de viscosité minimale faible sans durcissement est une variation de moins de 5 unités Mooney mesurée à 100°C après un vieillissement à température ambiante de huit semaines et ladite troisième zone de durcissement a un degré de durcissement tel que mesuré par l'appareil de compression égal ou inférieur à 40%.
